# EUROPÄISCHE PATENTANMELDUNG

(11) **EP 1 188 552 A2**
(43) Veröffentlichungstag der Anmeldung: **20.03.2002**
(21) Anmeldenummer: 01115195.8
(22) Anmeldetag: 22.06.2001
(51) Int. Cl.: B32B 27/08, F16L 11/04

(54) **Mehrschichtiger Schlauch**

(30) Priorität: 13.09.2000 DE 10045165
(71) Anmelder: VERITAS AG, 63571 Gelnhausen (DE)
(72) Erfinder: Severengiz, Tevfik, Dr., 63571 Gelnhausen (DE); Dipl.-Ing. Schieb, Michael, 63825 Schöllkrippen (DE)
(74) Vertreter: Grünecker, Kinkeldey, Stockmair & Schwanhäusser Anwaltssozietät

(57) **Zusammenfassung**

Die Erfindung bezieht sich auf einen mehrschichtigen Schlauch zum Fördern von Kraftstoffen, mit wenigstens einer Trägerschicht, die einen Thermoplasten enthält, einer Polyvinylidenfluorid enthaltenden Sperrschicht, und einer zwischen Sperrschicht und Trägerschicht angeordneten Zwischenschicht. Um die mechanischen und chemischen Eigenschaften eines solchen Schlauchs zu verbessern ist erfindungsgemäß vorgesehen, dass die Trägerschicht die innerste Schicht des Schlauches bildet und die Zwischenschicht eine Mischung aus einem Thermoplasten und Polyethylenimin enthält.

## Beschreibung

Die vorliegende Erfindung bezieht sich auf einen mehrschichtigen Schlauch zum Fördern von Kraftstoffen, mit wenigstens einer Trägerschicht, die einen Thermoplasten enthält, einer Polyvinylidenfluorid enthaltenden Sperrschicht und einer zwischen Trägerschicht und Sperrschicht angeordneten Zwischenschicht.

Derartige mehrschichtige Schläuche zum Fördern von Kraftstoffen sind z.B. aus der DE 93 21 566 bekannt. Die Sperrschicht, die z.B. aus Polyvinylidenfluorid bestehen kann, soll die Diffusion von Kohlenwasserstoffen durch den Schlauch während des Förderns von Kraftstoffen verhindem. Die Sperrschicht bildet die innerste Schicht des Schlauchs. Durch die Trägerschicht erhält der Schlauch seine erforderliche Festigkeit. Die Trägerschicht bildet bei dem bekannten Schlauch die Außenschicht und besteht z.B. aus Polyamid, vorzugsweise PA6. Zwischen der Trägerschicht und der Sperrschicht ist eine Zwischenklebeschicht angeordnet, um die Sperrschicht mit der Trägerschicht zu verbinden. Die Zwischenklebeschicht besteht dabei entweder aus Polyvinylidenfluorid/Thermoplast- oder aber einer Polyvinylacetat/Urethan-Mischung.

Die bekannten Schläuche haben sich bewährt. Zunehmend strengere Anforderungen an die Haltbarkeit und Sperreigenschaften der Schläuche bei gleichzeitigem Kostendruck erfordern jedoch eine Verbesserung der bisher bekannten Schläuche. Es ist daher Aufgabe der Erfindung die bislang bekannten Schläuche sowohl hinsichtlich ihrer mechanischen, wie auch chemischen Eigenschaften zu verbessern und demnach eine kostengünstige Herstellung zu ermöglichen.

Die Aufgabe wird erfindungsgemäß dadurch gelöst, dass die Trägerschicht die innerste Schicht des Schlauches bildet und die Zwischenschicht eine Mischung aus einem Thermoplasten und Polyethyleminin enthält.

Diese Lösung ist einfach und führt zu einer verbesserten mechanischen Festigkeit, da sich gezeigt hat, dass sich mit einer Zwischenschicht aus einer Mischung aus einem Thermoplasten und Polyethylimin eine chemisch, thermisch und dynamisch mechanisch festere Verbindung zwischen der Trägerschicht und der Sperrschicht erzielen lässt. Gegenüber den bekannten Schläuchen findet keine Delaminierung zwischen den Schichten mehr statt. Dadurch verlängert sich die Lebensdauer des Schlauches. Weiterhin lässt sich das Material der Zwischenschicht gut verarbeiten und ermöglicht eine kostengünstige Herstellung.

In einer vorteilhaften Weiterbildung der Erfindung ist der Thermoplast der Trägerschicht ein Polyamid, vorzugsweise PA6.

Auch kann es sich als günstig erweisen, wenn die Trägerschicht vollständig aus dem Thermoplasten besteht. Polyamid hat eine ausreichende Festigkeit und Resistenz gegen die geförderten Kraftstoffe.

Um die Anbindung der Zwischenschicht an die Trägerschicht zu verbessern kann der Thermoplast der Zwischenschicht gleich dem Thermoplasten der Trägerschicht sein.

Eine weitere Verbesserung des Schlauches kann erzielt werden, wenn eine zweite Trägerschicht vorgesehen ist, die einen Thermoplasten enthält, wobei die Sperrschicht zwischen den beiden Trägerschichten angeordnet ist. Dadurch kann die Sperrschicht besser gegen mechanische Belastung geschützt werden.

Auch kann es sich als günstig erweisen, wenn zwischen der Sperrschicht und der zweiten Trägerschicht eine zweite Zwischenschicht vorgesehen ist, die eine Mischung aus einem Thermoplasten und Polyethylenimin enthält. Auch hier kann die zweite Zwischenschicht für eine feste Verbindung zwischen Sperrschicht und der zweiten Trägerschicht sorgen.

Zudem kann es sich als vorteilhaft erweisen, wenn die zweite Trägerschicht vollständig aus dem Thermoplasten hergestellt ist. Dies kann zu einer Senkung der Herstellungskosten beitragen, da nur ein Material zur Herstellung der Trägerschicht verwendet wird.

Um die mechanischen Eigenschaften des Schlauches gezielt beeinflussen zu können, kann es sich als vorteilhaft erweisen, wenn der Thermoplast der zweiten Trägerschicht sich von Thermoplasten der ersten Trägerschicht unterscheidet. Je nach gewünschtem Ergebnis kann somit die Innenschicht oder die Außenschicht chemisch und thermisch restistenter gestaltet werden.

Hierbei kann es sich als günstig erweisen, wenn der Thermoplast der zweiten Trägerschicht ein Polyamid, vorzugsweise PA12 ist.

Um eine feste Verbindung zwischen der zweiten Trägerschicht und der Sperrschicht zu gewährleisten, kann der Thermoplast der zweiten Trägerschicht gleich den Thermoplasten der zweiten Zwischenschicht sein.

Weiterhin kann es sich als günstig erweisen, wenn die Stärke der Sperrschicht höchsten der halben Stärke einer der Trägerschichten entspricht. Die mechanischen Belastungen werden dann hauptsächlich durch die Trägerschichten aufgenommen und die Sperrschicht erfüllt im wesentlichen nur die Sperrwirkung.

Auch kann es sich als günstig erweisen, wenn die Stärke der ersten Trägerschicht maximal der halben Stärke der zweiten Trägerschicht entspricht. Auch hierdurch lassen sich die mechanischen Eigenschaften des Schlauches gezielt beeinflussen. Durch die wesentlich stärkere zweite Trägerschicht lässt sich ein sehr steifer Schlauch realisieren.

Weiterhin kann die Stärke der ersten oder zweiten Zwischenschicht höchstens etwa ein Zehntel der Stärke einer der Trägerschichten entsprechen. Da die bei der Zwischenschicht verwendeten Materialien teurer sind als die der Trägerschichten, können die teueren Materialien nur dort gezielt eingesetzt werden, wo sie wirklich erforderlich sind.

Die Wirkungsweise der Erfindung wird nachfolgend anhand eines Ausführungsbeispiels beschrieben.

Die einzige Figur zeigt eine Schnittdarstellung durch einen erfindungsgemäßen Schlauch.

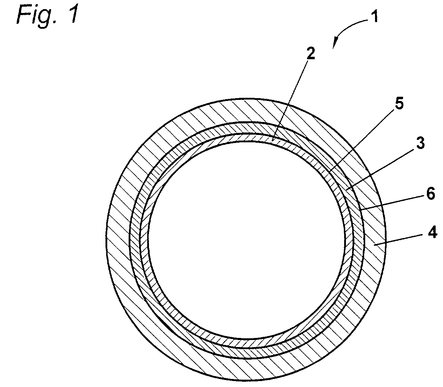

Die Darstellung ist der Übersicht halber nicht maßstabsgerecht. Die Figur 1 zeigt den erfindungsgemäßen Schlauch 1 zum Fördern von Kraftstoffen. Der Schlauch 1 verfügt über eine erste Trägerschicht 2, die die Innenschicht des Schlauches bildet. Die erste Trägerschicht 2 besteht aus einem Polyamid, nämlich PA6.

Eine Sperrschicht 3 besteht aus Polyvinylidenfluorid. Diese Sperrschicht verhindert ein Diffundieren der Kohlenwasserstoffe durch den Schlauch während des Förderns von Kraftstoffen.

Eine zweite Trägerschicht 4 bildet die Außenschicht des Schlauchs. Diese zweite Trägerschicht 4 besteht ebenfalls aus einem Polyamid, wobei sich jedoch das Polyamid der zweiten Trägerschicht von dem der ersten Trägerschicht unterscheidet. Bei der zweiten Trägerschicht wird als Polyamid ein PA12 verwendet. Die Stärke der ersten Trägerschicht 2 beträgt maximal etwa nur die Hälfte der Stärke der zweiten Trägerschicht 4. Zusätzlich ist es denkbar, weitere Schichten auf der zweiten Trägerschicht 4 vorzusehen, wie z.B. eine Gummischicht oder dergleichen.

Die Sperrschicht 3 ist zwischen der ersten Trägerschicht 2 und der zweiten Trägerschicht 4 angeordnet. Zwischen der ersten Trägerschicht 2 und der Sperrschicht 3 befindet sich eine erste Zwischenschicht 5, die aus einer Mischung aus einem Polyamid und Polyethylenimin besteht. Bei dem Polyamid der ersten Zwischenschicht 5 handelt es sich um das gleiche Polyamid, das auch für die erste Trägerschicht verwendet wird, nämlich PA6. Polyethylenimin wird üblicherweise als als Lupasol bezeichnet.

Zwischen der Sperrschicht und der zweiten Trägerschicht 4 befindet sich eine zweite Zwischenschicht 6, die ebenfalls aus einer Mischung aus einem Polyamid und Polyethylenimin besteht. Bei dem Polyamid der zweiten Trägerschicht handelt es sich um das gleiche Polyamid, das auch für die zweite Trägerschicht 4 verwendet wird, nämlich PA12.

Die ersten und zweiten Zwischenschichten 5 und 6 verfügen jeweils über eine Stärke, die maximal etwa einem Zehntel der Stärke einer der beiden Trägerschichten entspricht. Die Stärke der Sperrschicht 3 beträgt etwa maximal die Hälfte der Stärke der dünneren der beiden Trägerschichten.

Nachfolgend wird die Wirkungsweise der Erfindung näher erläutert.

Es hat sich gezeigt, dass die Verwendung von Polyethylenimin in den Zwischenschichten zu einer deutlich festeren Verbindung zwischen der Sperrschicht und den benachbarten Trägerschichten führt. Die Lebensdauer des Schlauches wird deutlich verlängert. Auch verbessern sich dadurch seine mechanischen Eigenschaften. Die gute Verarbeitbarkeit der verwendeten Materialien führt zu kostengünstiger Herstellung. Durch gezieltes Variieren der Stärken von Sperrschicht und Trägerschichten lassen sich die mechanischen Eigenschaften des Schlauches zusätzlich beeinflussen.

## Patentansprüche

1. Mehrschichtiger Schlauch zum Fördern von Kraftstoffen, mit wenigstens einer Trägerschicht (2), die einen Thermoplasten enthält, einer Polyvinylidenfluoridenthaltenden Sperrschicht (3) und eine zwischen Sperrschicht und Trägerschicht angeordneten Zwischenschicht (5), **dadurch gekennzeichnet, dass** die Trägerschicht (2) die innerste Schicht des Schlauches (1) bildet und die Zwischenschicht (5) eine Mischung aus einem Thermoplasten und Polyethylenimin enthält.

2. Mehrschichtiger Schlauch nach Anspruch 1, **dadurch gekennzeichnet, dass** der Thermoplast der Trägerschicht Polyamid, vorzugsweise PA6 ist.

3. Schlauch nach einem der vorangegangenen Ansprüche, **dadurch gekennzeichnet, dass** die Trägerschicht vollständig aus dem Thermoplasten besteht.

4. Mehrschichtiger Schlauch nach einem der vorangegangenen Ansprüche, **dadurch gekennzeichnet, dass** der Thermoplast der Zwischenschicht gleich dem Thermoplasten der Trägerschicht ist

5. Mehrschichtiger Schlauch nach einem der vorangegangenen Ansprüche, **dadurch gekennzeichnet, dass** eine zweite Trägerschicht (4) vorgesehen ist, die einen Thermoplasten enthält, wobei die Sperrschicht (3) zwischen den beiden Trägerschichten (2,4) angeordnet ist.

6. Mehrschichtiger Schlauch nach Anspruch 5, **dadurch gekennzeichnet, dass** zwischen der Sperrschicht (3) und der zweiten Trägerschicht (4) eine zweite Zwischenschicht (6) vorgesehen ist, die eine Mischung aus einem Thermoplasten und Polyethylenimin enthält.

7. Schlauch nach einem der Ansprüche 5 oder 6, **dadurch gekennzeichnet, dass** die zweite Trägerschicht vollständig aus dem Thermoplasten hergestellt ist.

8. Schlauch nach einem der Ansprüche 5 bis 7, **dadurch gekennzeichnet, dass** der Thermoplast der zweiten Trägerschicht sich vom Thermoplasten der ersten Trägerschicht unterscheidet.

9. Schlauch nach einem der Ansprüche 5 bis 8, **dadurch gekennzeichnet, dass** der Thermoplast der zweiten Trägerschicht ein Polyamid, vorzugsweise PA12 ist.

10. Schlauch nach einem der Ansprüche 5 bis 9, **dadurch gekennzeichnet, dass** der Thermoplast der zweiten Trägerschicht gleich dem Thermoplasten der zweiten Zwischenschicht ist.

11. Schlauch nach einem der vorangegangenen Ansprüche, **dadurch gekennzeichnet, dass** die Stärke der Sperrschicht höchstens der Hälfte der Stärke einer der Trägerschichten entspricht.

12. Schlauch nach einem der vorangegangenen Ansprüche, **dadurch gekennzeichnet, dass** die Stärke der ersten Trägerschicht etwa der Hälfte der Stärke der zweiten Trägerschicht entspricht.

13. Schlauch nach einem der vorangegangenen Ansprüche, **dadurch gekennzeichnet, dass** die Stärke der ersten oder zweiten Zwischenschicht höchstens etwa einem Zehntel der Stärke einer der Trägerschichten entspricht.
